# EUROPEAN PATENT SPECIFICATION

(11) **EP 4 594 613 B1**
(45) Date of publication and mention of the grant of the patent: **04.03.2026**
(21) Application number: 24761957.0
(22) Date of filing: 28.08.2024
(51) Int. Cl.: F02M 21/02, F02D 19/02, F01N 3/20, F02M 53/04, F02D 19/06

(54) **INTERNAL COMBUSTION ENGINE**
BRENNKRAFTMASCHINE
MOTEUR À COMBUSTION INTERNE

(30) Priority: 18.09.2023 EP 23197956
(43) Date of publication of application: 06.08.2025
(60) Divisional application: 25186957.4
(73) Proprietor: WinGD Ltd., 8400 Winterthur (CH)
(72) Inventor: SCHMID, Andreas, 4247 Grindel (CH); ZAGORSKIY, Alexander, 5430 Wettingen (CH); YILDIRIM, Turhan, 8408 Winterthur (CH)
(74) Representative: Hepp Wenger Ryffel AG
(86) International application number: PCT/EP2024/074000
(87) International publication number: WO 2025/061427

(56) References cited:
- WO-A1-2023/028626
- DK-A1- 202 170 273
- JP-B2- 4 978 580
- US-A1- 2014 048 037

## Description

The present invention is directed to an internal combustion engine having at least one cylinder and to a method for operating an internal combustion engine.

The present invention is in particular related to combustion engines which use ammonia as a, in particular main, fuel.

The present invention relates to an internal combustion engine whose cylinders have an inner diameter of at least 200 mm, like e.g. a large marine or ship engine or a stationary engine.

The engine preferably is a two-stroke engine or a two-stroke cross head engine. The engine can be a diesel or a gas engine, a dual fuel or a multi fuel engine. Burning of liquid and or gase-ous fuels in such engines is possible as well as self-igniting or forced igniting.

The internal combustion engine can be a longitudinally scavenged two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which a main fuel is ignited with the help of a pilot injection of a self-igniting fuel or alternatively with the adoption of a pre-chamber solution.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), Biological Fuels (e. g**.** Oil made from algae), Hydrogen, Synthetic fuels from CO2 (e. g**.** made by Power-To-Gas or Power-To-Liquid).

Ammonia-fuelled ships are increasingly being developed and built, or engines adapted to be driven by ammonia-fuel, following a 2018 International Maritime Organisation commitment to cut International shipping's greenhouse gas emissions.

Ammonia is a synthetic product obtained from fossil fuels, biomass, or renewable sources (wind, solar, hydro, or thermal), and when generated by renewable sources, ammonia will have virtually no carbon footprint or emit any CO2, SOX, particulate matter, or unburned hydrocarbons when combusted.

When the fuel is ammonia, it is desirable to minimise emissions of ammonia gas because ammonia is hazardous and has a pungent smell. This is particularly relevant for crew safety, and when an engine stops and/or when a change to conventional fuel and/or backup fuel takes place and/or in occurrence of an unexpected event. Therefore, it is known to purge the engine and pipings, typically with an inert gas, such as nitrogen.

Purging of ammonia is needed to enable maintenance during stops and, in general, to prevent appearance of ammonia in the engine room due to leakages.

The risk of events like ammonia leakage into the engine room or alike is thus minimized. Such leaks may cause the engine to trip during operations, and an unplanned engine stop may have very serios consequences, e.g. in the harbour or port and/or during re-fuelling.

When ammonia is purged, a corrosion attack on the engine materials may be avoided during durable backup fuel operation or during a stand-still.

Accumulation of fuel vapours up to the flammable/combustible range in the air compartments/pockets may be avoided.

During the purging process, some of the fuel will evaporate into the nitrogen purging stream, and so be vented from the vessel along with the nitrogen. However, purged ammonia cannot be simply vented to the atmosphere/surroundings.

WO2022234250 teaches a method of treating an ammonia-containing purge gas stream wherein the ammonia-containing purge gas stream is passed through a first tank containing water to provide a reduced-ammonia vent gas stream.

DK181016 discloses an ammonia absorption system containing water in use for absorption of ammonia supplied through the discharge path to the water, whereby ammonia water is formed. Ammonia water has to be stored and to be refurbished for further use.

It is also known to purge fuel nozzles in order to remove fuel residuals. Furthermore, it is known to cool fuel nozzles, for example from EP 4155526 A1. Generally, fuel nozzles need a piping for a purge medium and a piping for a cooling medium.

US2015192050 discloses an injector for injecting fuel for heating an aftertreatment devices, wherein after fuel injection, air flow through the nozzle is provided to purge residual fuel and to cool the nozzle to prevent carbon deposits.

DK202170273A1 discloses a large internal combustion engine for a marine vessel comprising a purge system to purge an ammonia fuel system.

It is an object of the present invention to at least in part prevent the drawbacks of the prior art and in particular to create an internal combustion engine and a method for operating an internal combustion engine, which allow a safer and more effective use.

The object is achieved by an internal combustion engine and a method for operating an internal combustion engine according to the independent claims.

The internal combustion engine has at least one cylinder having an inner diameter of at least 200mm. A piston is provided in said cylinder for reciprocating between a bottom dead center and a top dead center.

The internal combustion engine may have a scavenging port formed in said cylinder for supplying scavenging gas into a combustion chamber that is a space enclosed by said cylinder and an upper surface of said piston.

The internal combustion engine may be a longitudinally scavenged two-stroke engine, wherein the scavenging gas is introduced at the bottom of the cylinder via scavenging slots into the combustion chamber of the cylinder, while the piston is in the vicinity of his bottom dead center and clears the path for the scavenging gas into the combustion chamber of the cylinder.

The internal combustion engine may have an exhaust port formed in said cylinder, for example in the cylinder head, for exhausting gas out of said combustion chamber. The exhaust port comprises at least one exhaust valve.

The internal combustion engine comprises a fuel supply system with a main fuel tank, a fuel distributor, and preferably a pump fluidly arranged between the main fuel tank and the fuel distributor, for example arranged in a fuel line connecting the main fuel tank and the fuel distributor.

In particular, the fuel supply system may be an ammonia supply system. Alternatively, the fuel supply system may be a system for supplying methanol liquid fuel.

The main fuel tank may be suitable for storing and providing a liquid fuel, such as liquid ammonia. Typically, liquid fuel such as ammonia may be provided under a pressure of up to 25bar in the main fuel tank. With help of the pump, the pressure can be increased up to 85bar in the fuel supply system and due to the fuel injector design, the pressure in a fuel injection system may rise up to 500-600 bar.

The main fuel tank may be kept at lower temperature in order to reduce the storage pressure.

The internal combustion engine comprises a fuel injection system, in particular an ammonia injection system, arranged downstream the fuel distributor, comprising at least one injection line and at least one injector for each cylinder.

At least one separation valve is fluidly arranged between the fuel supply system and the fuel injection system, preferably at least one separation valve is arranged between the fuel distributor and each fuel injector of a plurality of cylinders. Thus, the fluid connection between the fuel supply system and the fuel injection system, in particular between the fuel distributor and the at least one injector, can be interrupted.

The internal combustion engine further comprises a fuel purge system with at least a liquid fuel purge system.

The liquid fuel purge system comprises a high pressure source of inert gas, preferably N2, preferably for holding and/or providing the inert gas with a pressure of greater than 30 bar, more preferably 30-45 bar.

The pressure level is dictated by the need to avoid ammonia boiling at the actual fuel temperature in the fuel supply system and the fuel injection system, which can noticeably exceed the one in the main fuel tank due to heat adsorption from the working engine and from the air in the engine room.

The high pressure source of inert gas is fluidly connected or connectable at least to the fuel supply system.

The liquid fuel purge system further comprises a catch tank for receiving and storing liquid fuel and inert gas.

The catch tank may be of the same type as the main fuel tank, but may have a smaller volume. The catch tank may be kept at a pressure of higher than 12 bar, preferably higher than 20 bar, preferably in range of 15bar to 20bar or in a range of 30bar to 45 bar. If the catch tank is kept at a pressure below 30bar, pressure may be matched between the fuel supply system and the fuel injection system.

The liquid fuel purge system further comprises a first purging line fluidly connected or connectable via a purge valve to the fuel distributor for establishing a fluid connection between the fuel supply system and the catch tank. Preferably, the purge valve is arranged in the first purging line.

At least one second purging line may be connected to the injector such that media guided into the injector may leave the injector through an injector nozzle for injection into the cylinder and/or through the at least one second purging line, for example for purging of the injector. A respective injection valve may be arranged in the injector.

The fuel purge system comprises a purge control unit which is adapted to set a first liquid fuel purge mode to purge the fuel supply system. In the first liquid fuel purge mode, the purge control unit is adapted to establish a fluid connection between the high pressure source of inert gas and the fuel distributor, and the purge control unit is adapted to establish a fluid connection between the fuel distributor and the catch tank, such that inert gas from the high pressure source of inert gas is guided through the fuel distributor and into the catch tank. Liquid fuel may be purged from the fuel distributor in this mode.

Preferably, in the first liquid fuel purge mode, the purge control unit is adapted to set the separation valve to close the connection between the fuel supply system and the fuel injection system before a fluid connection between the high-pressure source of inert gas and the fuel distributor is established.

Thus, high pressure inert gas may be prevented from being guided through the fuel injection system. The fuel injection system may comprise residuals of sealing oil which should not be collected in the catch tank. In case of a liquid purge, the fuel would be contaminated, whereas the fuel vapor would not carry the oil. If only liquid fuel and inert gas is collected in the catch tank, the catch tank can be used as a fuel source.

The internal combustion system may comprise an additional fuel supply system, in particular for a backup fuel, such as diesel, which may at least in part use the same fuel distributor and the same fuel injection system. Alternatively, the additional fuel supply system may comprise a completely separate backup fuel supply system and a completely separate backup fuel injection system.

The high pressure source of inert gas is fluidly connected or connectable at least to the fuel supply system upstream the fuel distributor.

In the context of this application, the term "upstream" refers to the regular direction of fuel flow from the fuel tank into the cylinder.

With a high pressure source of inert gas arranged upstream the fuel distributor, the fuel distributor may be purged in downstream direction.

In an alternative embodiment not covered by the claims, the high pressure source of inert gas may be fluidly connected or connectable to the fuel supply system downstream the fuel distributor. In particular, the separation valve may be adapted not only to close the connection between fuel injection system and fuel distributor, but also to establish a connection between the high pressure source of inert gas and the fuel distributor.

According to the invention, the fuel purge system additionally comprises a gaseous fuel purge system. The gaseous fuel purge system comprises a low pressure source of inert gas, preferably N2, preferably for holding and/or providing the inert gas with a pressure of 3-7 bar.

The low pressure source of inert gas is fluidly connected or connectable to the fuel injection system.

The gaseous fuel purge system comprises at least one second purging line, each second purging line is fluidly connected with one of the at least one injector.

The gaseous fuel purge system comprises a purge tank for receiving and storing gaseous fuel and inert gas. The purge tank may be kept at a pressure of 2-10 bar, preferably 4-6 bar, in particular to minimize consumption of the inert gas, for example nitrogen.

The gaseous fuel purge system may comprise a pressure relief valve, which may be fluidly arranged between the at least one second purging line and the purge tank.

The purge control unit is configured to set a first gaseous fuel purge mode to purge the fuel injection system.

In the first gaseous fuel purge mode, the purge control unit is adapted to reduce the pressure in the fuel injection system, such that fuel in the fuel injection system may evaporate, for example by providing for opening the pressure relief valve.

In the first gaseous fuel purge mode, the purge control unit is adapted to establish a fluid connection between the low pressure source of inert gas and fuel injection system and to establish a fluid connection between the fuel injection system and the purge tank, such that inert gas from the low pressure source of inert gas is guided through the fuel injection system and into the purge tank.

The low pressure source of inert gas may be fluidly connected or connectable to the fuel injection system upstream of the fuel injection system and in particular upstream of the fuel distributor.

Alternatively, the low pressure source of inert gas may be fluidly connected or connectable to the fuel injection system via the separation valve. In particular, the separation valve may be adapted to not only to open and close the connection between fuel injection system and fuel distributor, but also to establish a connection between the low pressure source of inert gas and the fuel injection system.

A pressure relief valve of the gaseous fuel purge system may be connectable to a low pressure reservoir of inert gas. In the first gaseous fuel purge mode, the purge control unit may be adapted to reduce the pressure in the fuel injection system) by setting the pressure relief valve to be opened to the low pressure reservoir of inert gas.

The low pressure reservoir of inert gas may be the purge tank or a separate low pressure reservoir.

The internal combustion engine may comprise an SCR catalyst and an SCR valve fluidly arranged between the at least second purging line and the SCR catalyst.

The purge control unit may be adapted to set the SCR valve to be opened to release pressure and to allow gaseous fuel to leave the fuel injection system and to enter the SCR catalyst. Hence, if the fuel is ammonia, residuals of gaseous ammonia can be guided into the SCR reactor, for example before the internal combustion engine changes to operation with a backup fuel.

The purge control unit may be adapted to set the quantity of gaseous fuel to enter the SCR catalyst. The quantity of the gaseous ammonia should correspond to the actual NO_{X} emissions in order not to create an ammonia slip in the exhaust gas.

In particular, the purge control unit may be adapted to close the fluid connection between the second purging line and the purge tank, such that at least during a certain time interval, all gaseous fuel may be guided into the SCR reactor.

Before purging, the catch tank may be partially filled with liquid fuel, such as ammonia. A mixture of inert gas, for example N2, and fuel, such as ammonia, may accumulate on the top. Purge pressure may rise during purging, mainly, due to incondensable gas. The inert gas may be be drained. The mixture can be released into the SCR reactor or into the purge tank.

The purge control unit may be adapted to set a second liquid fuel purge mode to purge the fuel injection system, in particular at the same time or subsequent to the first liquid fuel purge mode, wherein the purge control unit is adapted to establish a fluid connection between the high pressure source of inert gas and the fuel injection system, and wherein the purge control unit is adapted to establish a fluid connection between the fuel injection system and the catch tank and/or into the purge tank.

In the second liquid fuel purge mode, inert gas from the high pressure source of inert gas is guided through the fuel injection system and into the catch tank and/or into the purge tank.

Since the fuel injection system may be contaminated with oil, one may not want to purge it into the catch tank, as this fuel is meant to be used further.

However, if the risk of contamination is considered not to be high or if no adverse consequences of contamination are expected, inert gas and fuel may be purged into the catch tank.

The second liquid fuel purge mode allows to push liquid fuel out of the fuel injection system, which may be necessary in certain situations, such as during emergency engine stop or so called "trip to diesel", that is an emergency changeover to diesel in case of, for instance, detection of ammonia leaking into the engine room.

The first gaseous fuel purge mode may be required after the second liquid purge mode since there may be residua of the fuel left in the system, such as droplets on the wall, fluid pockets etc., which are difficult to purge in the liquid fuel purge mode.

During an emergency stop, less time is available for purging. The liquid fuel such as ammonia from the complete system may be flushed quickly, preferably directly into the purge tank instead of being distributed to the catch tank and the purge tank.

The size of the purge tank may be selected in order to accommodate the entire amount of ammonia stored in the purged lines and injectors.

For opening the connection between the high pressure source of inert gas and the fuel injection system in the second liquid fuel purge mode, the purge control unit may be adapted to set the separation valve in order to open the connection between the fuel supply system and the fuel injection system, or to keep the connection open. Additionally, the purge control unit may be adapted to establish a connection between the high pressure source of inert gas and the fuel supply system.

Thus, high pressure inert gas may enter the fuel injection system via the fuel supply system and the separation valve.

Preferably, in the second liquid fuel purge mode the purge control unit is adapted to set the purge valve in order to close the connection between the fuel distributor and the first purging line, such that high pressure inert gas leaves the fuel distributor mainly through the fuel injection system.

The purge control unit may be adapted to set a second gaseous fuel purge mode to purge the fuel supply system subsequent to the first liquid fuel purge mode, wherein the purge control unit is adapted to establish a fluid connection between the low pressure source of inert gas and the fuel supply system. Thus, residuals of fuel may evaporate. In the second gaseous fuel purge mode, the purge control unit is further adapted to establish a fluid connection between the fuel supply system and the purge tank. Gaseous fuel from the fuel supply system may thus be guided to the purge tank.

The first purging line and the at least one second purging line may merge into one common purge line downstream the fuel supply system and the fuel injection system. This common purge line may be adapted to be opened towards the catch tank or towards the purge tank depending on the purge mode and depending on the aggregate states of the purged fuel.

The internal combustion engine may comprise a first sensor for suppling data representative for the fuel concentration and/or the fuel content in the fuel injection system. The internal combustion engine may comprise a second sensor for suppling data representative for the fuel concentration and/or the fuel content in the fuel supply system.

The purge control unit may be adapted to receive data provided by the first sensor and/or the second sensor and may be adapted to decide whether a respective purge mode has to be upheld or repeated depending on the data. The purge control unit may be adapted to compare the received data with a preset limit.

The internal combustion engine may comprise more than one cylinder. In the first gaseous fuel purge mode, the purge control unit may be adapted to purge only a part of the fuel injection system being related to a part of the cylinders while the other cylinders are still operating. In this case, the purge control unit is adapted to supply low pressure inert gas downstream the fuel distributor and only to the injection lines/injectors to be purged.

Additionally or alternatively, in the second liquid fuel purge mode, the purge control unit may be adapted to purge only a part of the fuel injection system being related to a part of the cylinders. In this case, the purge control unit is adapted to supply high pressure inert gas only to the injection lines/injectors to be purged, while for example the separation valves connecting the other part of the injection system to the high pressure inert gas remain closed.

The internal combustion engine may comprise a direct connection pipe for directly connecting the catch tank and the fuel distributor, such that collected fuel from the catch tank is suppliable to the fuel distributor, for example via a pump. A direct connection valve may be arranged in the direct connection pipe. As the catch tank is filled with clean liquid fuel during purging, the content may be used for operating the engine. This helps to save fuel.

The purge tank may contain water for absorption of fuel, in particular ammonia, in use. Additionally or alternatively, the purge tank is connected or connectable to an absorbing stage containing water.

In particular, an ammonia/nitrogen mixture may be injected into water and washed before clean nitrogen is released into the environment.

In particular, the purge tank and/or the catch tank comprises a fuel capture system, is connected to a fuel capture system or is connectable to a fuel capture system. The fuel capture system may comprise an acid scrabbing device and/or an air dilution device.

Acid scrabbing may be used, e.g. with a carbonic acid.

Also, an ammonia/nitrogen mixture from the catch tank may be injected into the cylinder at low pressure, when the scavenge ports are closed.

Alternatively, the liquid fuel/inert gas mixture may be diluted with the large amount of air until the safe concentration is reached and may then be discharged into the environment.

The purge tank and/or the catch tank may be connected to or connectable to the cylinder and/or to an SCR reactor.

The purge tank pressure may be increased to 5 bar to enable injection.

Boil-off gas from the catch tank may be used to compress the gas in the purge tank to enable injection into the SCR reactor. The boil-off gas may be preheated in a scavenge air cooler or an exhaust gas economizer of the internal combustion engine.

The collected fuel, in particular ammonia, may be used as a re-ductant agent, when the internal combustion engine is operated with a backup fuel, in particular in a diesel mode. In particular, an ammonia/nitrogen mixture may be injected in small portions into an SCR reactor.

The purge modes, wherein liquid fuel is removed from the fuel supply system and the fuel injection system, may be set between a liquid fuel operation and a backup fuel operation.

The internal combustion engine, in particular the fuel supply system and/or the fuel injection system, may comprise heatable and/or coolable pipes, in particular double wall pipes. The purge control unit may be adapted to set the temperature of the pipes. In particular, during the first and/or the second gaseous fuel purge modes, the pipes may be heated to expedite evaporation and to reduce number of purge cycles.

Boiling of droplets of liquid fuel such as ammonia, on the walls, in elbows etc. must be avoided, otherwise there is the risk of over-cooling or freezing. The purge control unit may be adapted to reduce the pressure gradually in case the wall temperature drops below a critical value.

Evaporation of large quantities of ammonia inside the injectors or on the walls of the pipes can result in a significant over-cooling and thermo-mechanical stresses. Hence, controllable evaporation is necessary.

The gaseous fuel purge modes may in particular be applied when the internal combustion engine is fuelled with ammonia, whereas the liquid fuel purge modes may be applied for example to ammonia fuel or the methanol liquid fuel.

Gaseous fuel purge modes are less relevant for methanol liquid fuel because of much lower methanol vapour pressure.

According to an advantageous embodiment of the invention, the internal combustion engine further comprises an injector cooling system. The injector cooling system comprises a source of a cooling agent, for example a coolant (i.e. cooling agent) storage tank, a cooling inlet valve fluidly arranged between the source of a cooling agent and the fuel injection system, and a cooling control unit. Preferably, the cooling agent is different from the fuels, the source of the cooling agent is different from the fuel sources and/or the coolant storage tank is different from the fuel tanks.

A cooling inlet line may be connected downstream of the fuel distributor for directly guiding a cooling agent from the source of the cooling agent to the injection system. Alternatively, the cooling inlet line may be connected upstream of the fuel distributor or elsewhere in the fuel supply system.

The cooling control unit is adapted to provide for guiding a cooling agent through the fuel injection system, in particular through the at least one injection line and the at least one injector, and through the second purging line when the internal combustion engine is in an idle mode and/or in a backup fuel mode, such as the Diesel mode, and in particular when no purge mode is active. In particular, the cooling control unit is adapted to set the cooling inlet valve to allow cooling agent to enter the fuel injection system.

During the backup (diesel) fuel operation, the fuel injection system is idling (i.e. not injecting). Thus, the fuel injection system, in particular the injector, is not cooled by the injected ammonia. Therefore, a circulation of a coolant through the injector may be arranged in order to cool it.

The second purging line may be fluidly connected or connectable to the source of a cooling agent by means of a cooling outlet line. Thus, a cooling circuit may be established. The cooling circuit may comprise a heat exchanger to remove the heat.

A limited number of injection actions, in particular at least one injection or a predefined number of injections per time unit, may be performed during the backup fuel operation of the engine when the coolant is circulated through the cooling circuit in order to remove deposits which can be formed and/or accumulated inside the injection channels of the injectors during the back-up fuel operation of the engine.

During a changeover to the backup fuel operation, the replacement of the fuel with the coolant may be expedited by injection during cooling.

The cooling agent can be water or ammonia or a water-ammonia mixture, such as an aqueous ammonia.

The purge tank and/or the catch tank may be the source of the cooling agent, preferably a separate coolant tank is provided.

For the removal of the cooling agent from the fuel injection system, purge modes can be set analogously to those described above, in particular analogously to the first gaseous fuel purge mode and analogously to the second liquid fuel purge mode.

For example, when an ammonia-based cooling agent and an ammonia-based fuel are used, the purge tank and/or the catch tank may be used to collect inert gas for purging and the flushed cooling agent. Alternatively, a further collection tank or the coolant storage tank may be connectable to the purge line.

For example, for a changeover from liquid fuel operation to backup fuel operation, the injection lines may be disconnected from the injectors.

The liquid fuel injection may be stopped, then the injectors may be purged with the inert gas. Subsequently, the fluid connection between the injection system and the coolant storage tank may be established, and the injectors may be filled with the cooling agent (e.g. water). Thus, cooling starts after purging and the coolant may be circulated between the coolant storage tank and the fuel injection system, through the injectors. Any residuals remaining in the fuel injection system after purging may be absorbed and/or purged by the cooling agent.

Alternatively, when changing over from the liquid fuel operation to the backup fuel operation, the fuel supply system may be disconnected from the fuel injection system and the liquid fuel injection may be stopped. At least one injection action may be performed before the fuel injection is stopped in order to reduce amount of fuel in the fuel injection system. A fluid connection between the injection system and a coolant storage tank may be established.

The cooling storage may be initially filled with the cooling agent, e.g. with water, and the cooling may directly start with the cooling agent. The cooling agent may provide for purging and/or absorbing residuals of the liquid fuel out of the fuel injection system.

It should be noted that the cooling agent can be used for purging the fuel supply system and/or the injection system, thus complementing or even replacing the fuel purge system.

Alternatively, the coolant storage may be first filled with liquid fuel, or with liquid fuel flushed during purging.

After the injection lines may have been disconnected from the injectors, liquid fuel injection may be stopped, a fluid connection between the injection system and the coolant storage tank may be established and the circulation of a cooling agent, in this case the liquid fuel, may be started. Then, within a certain time, the liquid fuel is replaced by another cooling agent, for example water, and cooling is continued with the other cooling agent. The other cooling agent then may provide for purging and/or absorbing residuals of the liquid fuel out of the fuel injection system.

When changing over from the backup fuel operation to the liquid fuel operation, the fluid connection between the fuel injection system and a coolant storage tank may be disconnected first, then the fuel injection system with the injector may be purged with the inert gas (N2). Subsequently, the fuel injection system may be filled with the liquid fuel. Then, the injection of the liquid fuel may start.

Alternatively, when changing over from the backup fuel operation to the liquid fuel operation, the fluid connection between the injection lines and the coolant storage tank may be disconnected first and the connection between the fuel injection system and the fuel supply system may be established. Subsequently, the liquid fuel injection may be started.

It will take a certain time until the cooling agent in the fuel injection system is replaced by the liquid fuel. During this time, a mixture of cooling agent and liquid fuel is injected into the cylinder. After this certain time, the injection system is filled with the liquid fuel only and the engine operation can be continued on the liquid fuel.

Alternatively, when changing over from the backup fuel operation to the liquid fuel operation, the cooling agent may be gradually replaced with the liquid fuel. The cooling loop may be operated on liquid fuel, such as ammonia, before the fluid connection between the injection lines and the coolant storage tank is disconnected. The connection between the injection lines and the injectors may be established and the internal combustion engine may operate on the liquid fuel such as ammonia.

The object of the invention is also achieved by a method for operating an internal combustion engine, preferably an internal combustion engine as described above, having at least one cylinder, with an inner diameter of at least 200mm. The internal combustion engine comprises a fuel supply system, preferably an ammonia supply system, with a main fuel tank, a fuel distributor and preferably a pump. The internal combustion engine comprises a fuel injection system, preferably an ammonia injection system, arranged downstream the fuel distributor, comprising at least one injection line and at least one injector for each cylinder.

The method comprises the steps of providing high pressure inert gas, preferably N2, and guiding the high-pressure inert gas through the fuel distributor into a catch tank and thereby transporting liquid fuel from the fuel supply system into the catch tank.

In this context "high pressure" means that the inert gas is provided with a pressure of at least 30 bar, in particular 30-45 bar.

The liquid fuel from the fuel supply system is preferably guided into the catch tank via a purge valve fluidly arranged between the fuel distributor and the catch tank.

The method preferably comprises the steps of closing the fluid connection between the fuel supply system and the fuel injection system before the high-pressure inert gas is guided through the fuel distributor. The fluid connection is preferably closed by setting a separation valve, which is fluidly arranged between the fuel supply system and the fuel injection system.

According to the invention, the method comprises the steps of providing low pressure inert gas, preferably N2, to the fuel injection system and guiding the low pressure inert gas through the fuel injection system into a purge tank via at least one second purging line.

In this context "low pressure" means that the inert gas is provided with a pressure of 3-7 bar.

Each second purging line is fluidly connected with one of the at least one injectors. Evaporated gaseous fuel is thereby transported from the fuel injection system into the purge tank.

The method further comprises the step of reducing the pressure in the fuel injection system such that fuel in the fuel injection system evaporates, preferably before and/or during the period in which the low pressure inert gas is provided.

The method may additionally comprise the steps of providing high pressure inert gas, preferably N2, and guiding the high pressure inert gas through the fuel injection system into the catch tank. Liquid fuel is thereby transported from the fuel injection system into the catch tank.

Preferably the fluid connection between the fuel supply system and the fuel injection system is opened before or during the high pressure inert gas is transported through the fuel injection system, preferably by setting a separation valve.

The method may additionally comprise the steps of providing low pressure inert gas, preferably N2, and guiding the low pressure inert gas through the fuel distributor into a purge tank, thereby transporting gaseous fuel evaporated in the fuel supply system into the purge tank.

Preferably, the pressure in the fuel supply system may be reduced, such that fuel evaporates in the fuel supply system, before and/or during the low pressure inert gas is transported through the fuel distributor.

The method may additionally comprise the step of pumping liquid fuel from the catch tank to the fuel distributor, preferably via a direct connection pipe. Thus, previously purged fuel can be reused.

When the fuel flow is detected at the entrance of a catch tank, the system re-fill is stopped.

Preferably, the method for operating the internal combustion engine as described comprises a purging sequence with the following consecutive steps.

In a first step, the first liquid fuel purge mode is set to purge the fuel supply system with a high pressure inert gas.

In a second optional step, the second liquid fuel purge mode is subsequently set to purge the fuel injection system with a high pressure inert gas.

As a further step after the first or, if the second step has been performed, after the second step, the first gaseous fuel purge mode is set to purge the fuel injection system with a low pressure inert gas.

Finally, the second gaseous fuel purge mode is set to purge the fuel supply system with a low pressure inert gas.

High-pressure inert gas can expel liquid fuel from a respective subsystem. Oil residues may also be discharged.

Low pressure inert gas enables fuel to be vaporised from corners and edges, in particular in combination with reducing the pressure beforehand or at the same time, such that the respective subsystem is cleaned even from small amounts of residual fuel. This helps to more efficiently purge the respective system from fuel residues because the fuel injectors are arranged above (with regard to the force of gravity) the fuel distributor.

In an advantageous embodiment, the method further comprises the steps of providing a cooling agent (i.e. coolant) to the fuel injection system, preferably via a cooling inlet valve.

The cooling agent is guided through the fuel injection system while the engine is in the idle mode and/or during backup fuel operation.

During the backup fuel operation, the injector is not cooled by the injected fuel. During the liquid fuel (main fuel) operation the injector and, in particular the nozzles of the injector, are cooled by the injected fuel.

During backup fuel operation, the cooling agent may also help to prevent the injector holes from clogging.

Typically, a dual fuel internal combustion engine is started in a backup fuel (diesel) operation in regular intervals. The operation of the cooling system has to be prepared before the engine starts and/or in idle mode (no load).

In particular, the cooling agent is guided via the injection line, the injector, and at least one second purging line, wherein preferably each second purging line is fluidly connected with one of the at least one injectors.

For establishing a fluid connection between the source of the cooling agent and the fuel injection system, a cooling inlet line may be connected downstream of the fuel distributor. This way the cooling agent may be guided directly from the source of the cooling agent to the injection line.

Preferably, the fluid connection between the fuel supply system and the fuel injection system is closed before and/or during the cooling agent is guided through the fuel injection system, preferably by setting a separation valve, which is fluidly arranged between the fuel supply system and the fuel injection system.

Alternatively, the cooling inlet line may be connected upstream of the fuel distributor, such that cooling agent may be guided though the fuel distributor and subsequently into the fuel injection system.

If, e.g., the cooling inlet line is connected upstream of the fuel distributor and water is used as a cooling agent, the injector cooling system may be used for a pressure test. As an example, fuel lines connecting the fuel tank and the fuel distributor can be filled with water during such a pressure test, for example after an engine maintenance. A possible leakage may be detected without using a hazardous substance.

A computer program may comprise a program code for carrying out the steps of the method as described above when the program is executed on a computer of an internal combustion engine as described above.

A computer program product which can be loaded directly into an internal memory of a digital computer may comprise software code portions executing the method steps as described above when the program is running on the digital computer of an internal combustion engine as described above.

A computer program product can comprise instructions to cause a computer, in particular a purge control unit and/or a cooling control unit, of an internal combustion engine as described above to execute the steps of a method as described above when the program is executed on the computer of the internal combustion engine. The purge control unit and the cooling control unit can be the same or separate control units or their functionality can be implemented in other control system such as an engine control unit.

A computer-readable medium can store such a computer program product.

In the following, the invention is further explained in embodiments by means of the following figures:
- Figure 1:: shows a schematic view of a first example of an internal combustion engine;
- Figure 2:: shows a schematic view of a second example of an internal combustion engine;
- Figure 3:: shows a schematic view of a third example of an internal combustion engine.

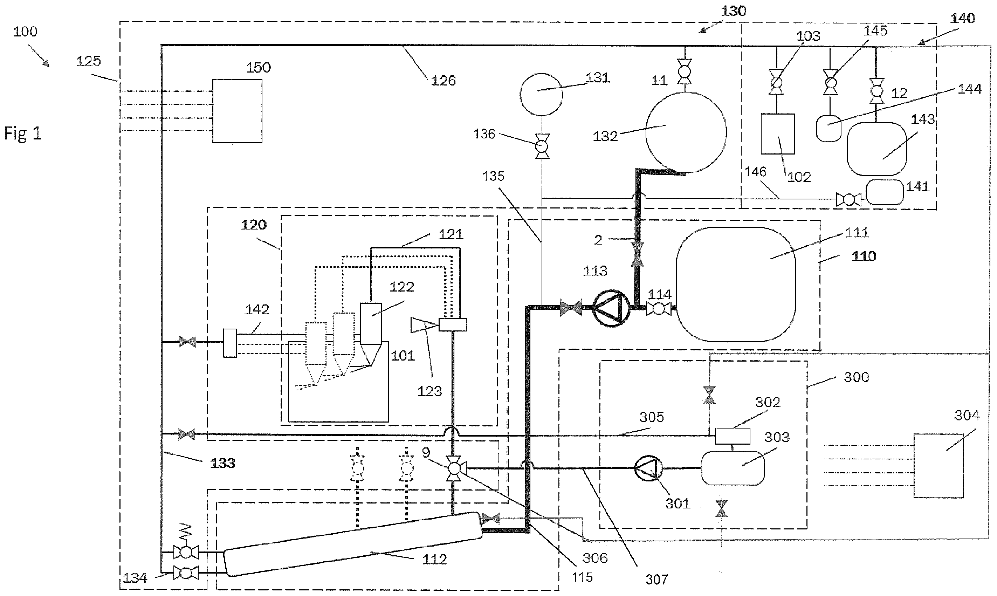

Figure 1 shows a schematic view of an example of an internal combustion engine 100.

The internal combustion engine 100 is a large engine having at least one cylinder 101 with an inner diameter of at least 200mm.

The internal combustion engine 100 comprises a fuel supply system 110, in particular an ammonia supply system, with a main fuel tank 111, a fuel distributor 112 and a pump 113 fluidly arranged between the main fuel tank 111 and the fuel distributor 112.

The internal combustion engine 100 comprises a fuel injection system 120, in particular an ammonia injection system, arranged downstream the fuel distributor 112, several injection lines 121 connected to respective injectors 122.

A separation valve 9 is fluidly arranged between the fuel supply system 110 and the fuel injection system 120 of a specific cylinder.

In the common case that the internal combustion engine comprises a plurality of cylinders 101, there may be a fuel injection system 120 for each cylinder 101. Each fuel injection system 120 may be fluidly connected to or separated from the fuel supply system 110 by a respective separation valve 9.

The internal combustion engine 100 further comprises a fuel purge system 125.

The fuel purge system 125 comprises a liquid fuel purge system 130 and a gaseous fuel purge system 140.

The liquid fuel purge system 130 has a high pressure source 131 of inert gas, preferably N2, preferably with a pressure of greater than 30 bar, more preferably 30-45 bar, which is fluidly connectable to at least the fuel supply system 110 upstream the fuel distributor 112. A high pressure gas supply line 135 merges into a fuel line 115, which connects the fuel tank 111 and the fuel distributor 112.

The liquid fuel purge system 130 comprises a catch tank 132 for receiving and storing liquid fuel which has been flushed out by high pressure inert gas.

A first purging line 133 having a purge valve 134 provides for fluidly connecting the fuel distributor 112 and the catch tank 132.

The fuel purge system 125 comprises a purge control unit 150 which is adapted to set a first liquid fuel purge mode to purge the fuel supply system 110. In the liquid fuel purge mode, the purge control unit is adapted to establish a fluid connection between the high pressure source 131 of inert gas and the fuel distributor 112, by providing an open position of a high pressure gas supply valve 136 in the high pressure gas supply line 135. The purge control unit 150 is further adapted to establish a fluid connection between the fuel distributor 112 and the catch tank 132, wherein the purge valve 134 is set open, such that inert gas from the high pressure source 131 of inert gas is guided through the fuel distributor 112 through the first purging line 133 and into the catch tank 132.

It is advantageous that the first purging line 133 is connectable to the lower part of the distributor 112 to evacuate liquid fuel which is collected in the lower part of the distributor 112.

The purge control unit 150 may be adapted to set the separation valve 9 to close the connection between the fuel supply system 110 and the fuel injection system 120 before a fluid connection between the high pressure source 131 of inert gas and the fuel distributor 112 is established, such that only the fuel supply system is purged.

The gaseous fuel purge system 140 comprises a low pressure source 141 of inert gas, preferably N2, preferably with a pressure of 3-7 bar, which is fluidly connected or connectable to the fuel injection system 120. In this example, a low pressure gas supply line 146 provides for guiding low pressure inert gas into the fuel distributor 112. Alternatively, low pressure inert gas may be fed in downstream the fuel distributor 112.

The gaseous fuel purge system 140 comprises second purging lines 142, wherein each second purging line 142 is fluidly connected with a respective injector 122.

The gaseous fuel purge system 140 comprises a purge tank 143 for receiving and storing gaseous fuel.

The gaseous fuel purge system 140 comprises several pressure relief valves 12, 103 145, wherein one pressure relief valve 12 is fluidly arranged between the at least one second purging line 142 and the purge tank 143.

The purge control unit 150 is adapted to set a first gaseous fuel purge mode to purge the fuel injection system 120 with low pressure inert gas.

In the first gaseous fuel purge mode, the purge control unit 150 is adapted to reduce the pressure in the fuel injection system 120 by opening at least one of the pressure relief valves 12, 145, 103, for example the purge tank valve 12, such that fuel in the fuel injection system 120 may evaporate.

In the first gaseous fuel purge mode, after or during evaporation, the purge control unit 150 is adapted to establish a fluid connection between the low pressure source 141 of inert gas and fuel injection system 120, and the purge control unit 150 is adapted to establish a fluid connection between the fuel injection system 120 and the purge tank 143. Inert gas from the low pressure source 141 of inert gas is guided through the fuel distributor 112 into the fuel injection system 120 and into the purge tank 143.

In the first gaseous fuel purge mode, the purge valve 134 may be closed, such that inert gas from the low pressure source 141 is forced into the fuel injection system 120.

One of the pressure relief valves 145 is connectable to a low pressure reservoir of inert gas 144. In the first gaseous fuel purge mode, the purge control unit 150 may be adapted to reduce the pressure in the fuel injection system 120 by setting the pressure relief valve 145 to be opened to the low pressure reservoir of inert gas 144.

The internal combustion engine comprises an SCR catalyst 102 and one of the pressure relief valves is an SCR valve 103 fluidly arranged between the at least second purging line 142 and the SCR catalyst 102. The purge control unit 150 may be adapted to set the SCR valve 103 to be opened to release pressure and to allow fuel to leave the fuel injection system 120 and to enter the SCR catalyst 102.

Whereas in the first liquid fuel purge mode high pressure inert gas is guided through the fuel supply system 110 and in the first gaseous fuel purge mode low pressure inert gas is guided through the fuel injection system 120, in a second liquid fuel purge mode, high pressure inert gas may be guided through the fuel injection system 120 and in a second gaseous fuel purge mode low pressure inert gas may be guided through the fuel supply system 110.

In the second liquid fuel purge mode, a fluid connection between the high pressure source 131 of inert gas and the fuel injection system 120 and a fluid connection between the fuel injection system 120 and the catch tank 132 may be established.

The separation valve 9 may be set to open the connection between the fuel supply system 110 and the fuel injection system 120, in particular the fuel injection system of a specific cylinder 101, such that high pressure inert gas may enter the fuel injection system 120 via the fuel distributor 112. The purge valve 134 may be set to close the connection between the fuel distributor 112 and the first purging line 133, such that the high pressure inert gas is forced into the fuel injection system 120.

In the second gaseous fuel purge mode, a fluid connection between the low pressure source 141 of inert gas and the fuel supply system 110 and a fluid connection between the fuel supply system 110 and the purge tank 143 is established. Preferably, the separation valve 9 is set to close the connection between the fuel supply system 110 and the fuel injection system 120 in the second gaseous fuel purge mode.

During purging, the purge control unit 150 may be adapted to close the fluid connection between the main fuel tank 111 and the fuel distributor 112, in particular by setting a filling valve 114 arranged in the fuel line 115 accordingly.

At least one sensor 123 is arranged in the fuel injection system 120 for suppling data representative for the fuel concentration and/or the fuel content in the fuel injection system 120.

The internal combustion engine 100 comprises a direct connection pipe 2 for directly connecting the catch tank 132 and the fuel distributor 112, such that collected fuel from the catch tank is suppliable to the fuel distributor 112 and liquid fuel collected during purging can be used for operating the internal combustion engine 100.

The first purging line 133 and second purging line 142 merge into purge line 126, which splits up into a line to the catch tank 132 and into a line to the purge tank 143. The upstream side of the purge line 126 is connected or connectable to the first purging line 133 or to the second purging line 142, and the downstream side of the purge line 126 is connected or connectable to the catch tank 132 and/or to the purge tank 143.

The purge line 126 comprises several valves for preventing a backflow into the fuel injection system 120, the fuel supply system 110 and/or the injector cooling system 300 (see below).

The internal combustion engine 100 further comprise an injector cooling system 300 comprising a coolant storage tank 303 as a source of a cooling agent, and a cooling inlet valve 306 fluidly arranged in a cooling inlet line 307 between the coolant storage tank 303 and the fuel injection system 120.

The injector cooling system 300 comprises a cooling control unit 304, which is adapted to set the cooling inlet valve 306, and preferably a cooling agent pump 301, to allow cooling agent to enter the fuel injection system 120 when the internal combustion engine 100 is in an idle mode and/or during backup fuel operation.

The cooling agent may be guided through the at least one injection line 121 and at least a respective injector 122, and through the second purging line 142. Each fuel injection system 120 may be cooled separately as the cooling inlet line 307 may be connected directly to the fuel injection system 120. In particular, the cooling inlet valve 306 may be combined with the separation valve 9.

The injector cooling system 300 comprises a cooling outlet line 305, fluidly arranged between the second purging line 142 and the source of the cooling agent 303 to establish a cooling agent circuit.

A cooling agent pump 301 may be arranged downstream the coolant storage tank 303 or anywhere else in the cooling agent circuit. A heat exchanger is arranged upstream the coolant storage tank 303 (in this specific context the terms upstream and downstream refer to the flow direction of the cooling agent). The coolant storage tank 303 may be refilled if necessary.

During cooling, preferably no purge mode is active.

Venting lines are arranged between the fuel distributor 112 and the purge tank 143 as well as between the cooling inlet line 307 and the purge tank 143. The venting lines may be closed and opened by respective valves.

Venting lines may allow to evacuate inert gas, which remains in the system during or after the re-filling.

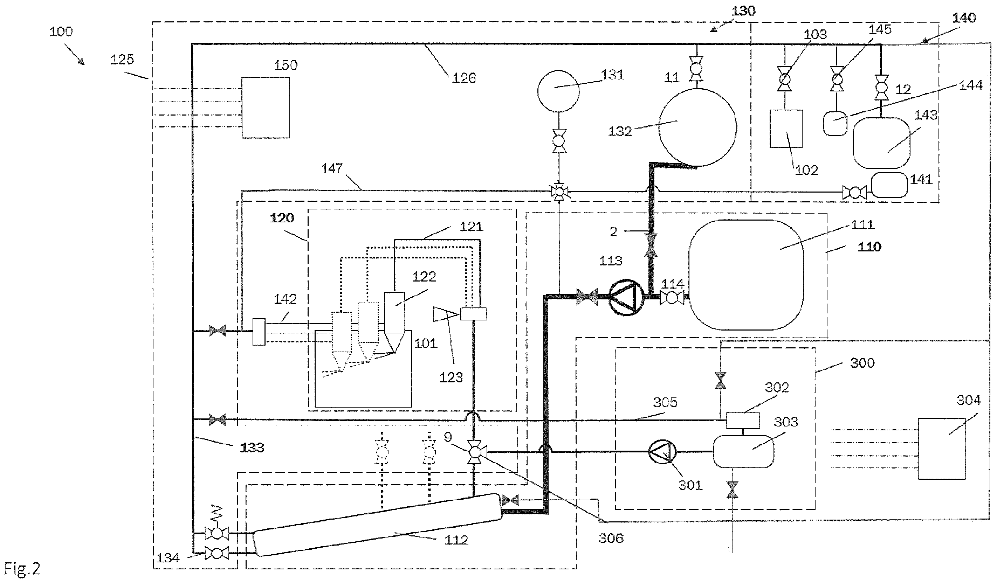

Figure 2 shows a schematic view of second example of an internal combustion engine 100, similar the internal combustion engine 100 according to figure 1.

In the first example according to Figure 1, high pressure and low pressure inert gas can be guided into the fuel distributor 112 via the fuel line 115. High pressure and low pressure inert gas basically are directed in the same way as the liquid fuel, such that the fuel injection system 120 may be purged downstream.

To the contrary, in the second example as shown in figure 2, the fuel injection system 120 may be purged with low pressure inert gas in upstream direction.

Inert gas from the low pressure source 141 can be guided into the fuel injection system 120 via the second purging lines 142.

Inert gas from the low pressure source 141 may be guided directly to the second purging lines 142 via an additional second purge line 147.

During the first and second gaseous fuel purge modes, inert gas and gaseous fuel may be guided to the fuel distributor 112 via the separation valve 9, and from there to the purge tank 143 and/or to the SCR catalyst 102 (not shown in the figures).

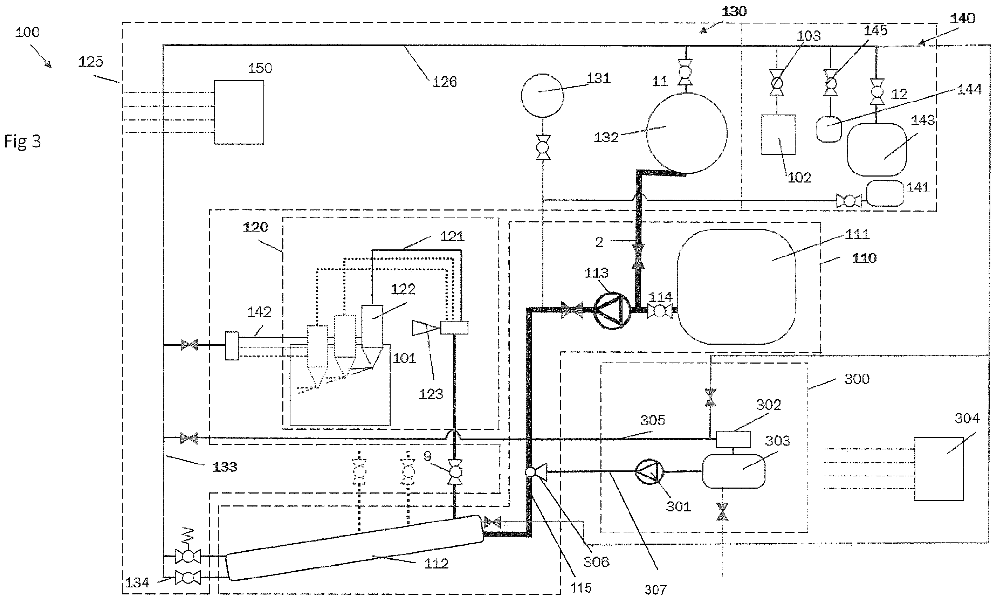

Figure 3 shows a schematic view of third example of an internal combustion engine 100, similar to the internal combustion engine 100 according to figure 1.

The internal combustion engine 100 also comprises an injector cooling system 300 with a coolant storage tank 303, a cooling inlet valve 306 fluidly arranged in a cooling inlet line 307. In this example, the cooling inlet line 307 may be fluidly connected to the fuel line 115, such that cooling agent is guided through the fuel distributor 112. All fuel injection systems 120 may be cooled at the same time, when the respective separation valves 9 are open.

This arrangement is advantageous if it is not possible or permitted to place a cooling inlet valve 306 in the engine room near the cylinder 101.

### Note:

While there are shown and described presently preferred embodiments of the invention, it is to be distinctly understood that the invention is not limited thereto but may be otherwise variously embodied and practiced within the scope of the following claims.

## Claims

1. An internal combustion engine (100), having at least one cylinder (101) with an inner diameter of at least 200 mm, comprising
- a fuel supply system (110) with a main fuel tank (111) and a fuel distributor (112),
- a fuel injection system (120) arranged downstream the fuel distributor (112) comprising at least one injection line (121) and at least one injector (122) for each cylinder (101),
- a separation valve (9) fluidly arranged between the fuel supply system (110) and the fuel injection system (120), and
- a fuel purge system (125) comprising
a liquid fuel purge system (130) with
∘ a high pressure source (131) of inert gas, preferably with a pressure of more than 30 bar, fluidly connected or connectable to the fuel supply system (110) upstream the fuel distributor (112),
∘ a catch tank (132) for receiving and storing liquid fuel, and
∘ a first purging line (133) fluidly connected or connectable via a purge valve (134) to the fuel distributor (112) for establishing a fluid connection between the fuel supply system (110) and the catch tank (132),
wherein the fuel purge system (125) comprises a purge control unit (150) configured to set a first liquid fuel purge mode for purging the fuel supply system (110), such that
∘ a fluid connection is established between the high pressure source (131) of inert gas and the fuel distributor (112),
∘ a fluid connection is established between the fuel distributor (112) and the catch tank (132) such that inert gas from the high pressure source (131) of inert gas is guided through the fuel distributor (112) and into the catch tank (132), and
∘ such that
preferably the separation valve (9) is set to close the connection between the fuel supply system (110) and the fuel injection system (120) before a fluid connection between the high pressure source (131) of inert gas and the fuel distributor (112) is established,
and wherein
the fuel purge system (125) comprises a gaseous fuel purge system (140) with
∘ a low pressure source (141) of inert gas, preferably with a pressure of 3-7 bar, fluidly connected or connectable to the fuel injection system (120),
∘ at least one second purging line (142), each second purging line (142) fluidly connected with one injector (122), and
∘ a purge tank (143) for receiving and storing gaseous fuel,
wherein the purge control unit (150) is configured to set a first gaseous fuel purge mode for purging the fuel injection system (120), such that
∘ a pressure in the fuel injection system (120) is reduced such that fuel in the fuel injection system (120) evaporates,
∘ a fluid connection is established between the low pressure source (141) of inert gas and the fuel injection system (120), and
∘ a fluid connection is established between the fuel injection system (120) and the purge tank (143) such that inert gas from the low pressure source (141) of inert gas is guided through the fuel injection system (120) and into the purge tank (143).

2. The internal combustion engine (100) according to claim 1, wherein a pressure relief valve (12, 145) of the gaseous fuel purge system (140) is connectable to the purge tank (143) and/or a separate low pressure reservoir of inert gas (144), and
herein in the first gaseous fuel purge mode, the purge control unit (150) is configured to reduce the pressure in the fuel injection system (120) by setting the pressure relief valve (145) to be opened to the purge tank (143) and/or to the separate low pressure reservoir of inert gas (144).

3. The internal combustion engine (100) according to any one of the claims 1 to 2, comprising an SCR catalyst (102) and an SCR valve (103) fluidly arranged between the at least one second purging line (142) and the SCR catalyst (102), wherein the purge control unit (150) is configured to set the SCR valve (103) to be opened to release pressure and to set the quantity of gaseous fuel to leave the fuel injection system (120) and to enter the SCR catalyst (102), and in particular to close the fluid connection between the second purging line (142) and the purge tank (143) such that all gaseous fuel is guided into the SCR catalyst (102).

4. The internal combustion engine (100) according to any one of the preceding claims, wherein the purge control unit (150) is configured to set a second liquid fuel purge mode for purging the fuel injection system (120), in particular at the same time or subsequent to the first liquid fuel purge mode, such that
∘ a fluid connection is established between the high pressure source (131) of inert gas and the fuel injection system (120), and
∘ a fluid connection is established between the fuel injection system (120) and the catch tank (132) and/or between the fuel injection system (120) and the purge tank (143),
such that inert gas from the high pressure source (131) of inert gas is guided through the fuel injection system (120) and into the catch tank (132) and/or into the purge tank (143).

5. The internal combustion engine (100) according to claim 4, wherein the purge control unit (150) is configured to set the separation valve (9) to open the connection between the fuel supply system (110) and the fuel injection system (120) and to open the connection between the high pressure source (131) of inert gas and the fuel injection system (120), such that inert gas from the high pressure source (131) enters the fuel injection system (120) via the fuel supply system (110) and the separation valve (9),
wherein preferably the purge control unit (150) is configured to set the purge valve (134) in order to close the connection between the fuel distributor (112) and the first purging line (133).

6. The internal combustion engine (100) according to any one of the claims 1 to 5, wherein the purge control unit (150) is configured to set a second gaseous fuel purge mode for purging the fuel supply system (110) subsequent to the first liquid fuel purge mode, such that
∘ a fluid connection is established between the low pressure source (141) of inert gas and the fuel supply system (110), and
∘ a fluid connection is established between the fuel supply system (110) and the purge tank (143).

7. The internal combustion engine (100) according to any one of the preceding claims, comprising at least one of
- a first sensor (123) for suppling data indicative of a fuel concentration in the fuel injection system (120), and
- a second sensor for suppling data indicative of a fuel concentration in the fuel supply system (110), and
wherein the purge control unit (150) is configured to receive the data provided by the first and/or the second sensor and configured to decide whether a respective purge mode has to be upheld or repeated depending on the data.

8. The internal combustion engine (100) according to any one of the claims 1 to 7, wherein the internal combustion engine comprises more than one cylinder (101) and
wherein in the first gaseous fuel purge mode, the purge control unit (150) is configured to purge only a part of the fuel injection system (120) being related to a subset of the cylinders (101) while the other cylinder or cylinders is or are still operating.

9. The internal combustion engine (100) according to any one of the claims 1 to 8, wherein the purge tank (143) contains water for absorption of fuel, in use, or is connected or connectable to an absorbing stage containing water.

10. The internal combustion engine (100) according to any one of the claims 1 to 9, wherein
- the purge tank (143) and/or the catch tank (132) comprises, is connected to, or is connectable to a fuel capture system, in particular an acid scrabbing device or an air dilution device
and/or
- the purge tank (143) and/or the catch tank (132) is connected to or connectable to the cylinder (101) and/or to the SCR catalyst (102)
and/or
- wherein the internal combustion engine (100) comprises a direct connection pipe (2) for directly connecting the catch tank (132) and the fuel distributor (112), such that collected fuel from the catch tank is suppliable to the fuel distributor (112).

11. The internal combustion engine (100) according to any one of the preceding claims, further comprising
- an injector cooling system (300) comprising
∘ a source (303) of a cooling agent,
∘ a cooling inlet valve (306) fluidly arranged between the source of a cooling agent (303) and the fuel injection system (120),
∘ a cooling control unit (304) configured to set the cooling inlet valve (301) such as to allow the cooling agent to enter the fuel injection system (120) to provide for guiding the cooling agent through the fuel injection system (120).

12. The internal combustion engine (100) according to claim 11 configured such that, when no fuel purge mode is active, the cooling agent can be guided through the at least one injection line (121), the at least one injector (122), and the second purging line (142),
in particular when the internal combustion engine (100) is in an idle mode or when the internal combustion engine (100) works on a backup fuel.

13. The internal combustion engine (100) according to any one of the claims 11 or 12, wherein the injector cooling system (300) comprises a cooling outlet line (305) fluidly arranged between the second purging line (142) and the source (303) of the cooling agent to establish a cooling agent circuit.

14. The internal combustion engine (100) according to any one of the preceding claims configured to use ammonia as a fuel.

15. A method for operating an internal combustion engine (100), preferably an internal combustion engine (100) according to any one of the claims 1 to 14, having at least one cylinder (101) with an inner diameter of at least 200 mm, comprising
- a fuel supply system (110) with a main fuel tank (111) and a fuel distributor (112),
- a fuel injection system (120) arranged downstream the fuel distributor (112) comprising at least one injection line (121) and at least one injector (122) for each cylinder (101),
the method comprising steps of
- preferably closing the fluid connection between the fuel supply system (110) and the fuel injection system (120),
- providing high pressure inert gas, preferably with a pressure of more than 30 bar,
- guiding the high-pressure inert gas through the fuel distributor (112) into a catch tank (132) and thereby transporting liquid fuel from the fuel supply system (110) into the catch tank (132),
- reducing the pressure in the fuel injection system (120) such that fuel in the fuel injection system (120) evaporates,
- providing low pressure inert gas, preferably with a pressure of 3-7 bar, to the fuel injection system (120),
- guiding the low pressure inert gas through the fuel injection system (120) into a purge tank (143) via at least one second purging line (142), each second purging line (142) being fluidly connected with one injector (122), and thereby transporting gaseous fuel evaporated in the fuel injection system (120) into the purge tank (143).

16. The method according to claim 15 comprising steps of
- preferably opening the fluid connection between the fuel supply system (110) and the fuel injection system (120),
- guiding the high pressure inert gas through the fuel injection system (120) into the catch tank (132) and/or the purge tank (143) and thereby transporting liquid fuel from the fuel injection system (120) into the catch tank (132) and/or the purge tank (143).

17. The method according to any one of the claims 15 to 16 comprising steps of
- reducing the pressure in the fuel supply system (110) such that fuel evaporates in the fuel supply system (110),
- providing low pressure inert gas, preferably with a pressure of 3-7 bar,
- guiding the low pressure inert gas through the fuel distributor (112) into a purge tank (143), thereby transporting gaseous fuel evaporated in the fuel supply system (110) into the purge tank (143).

18. The method according to any one of the claims 15 to 17 for operating an internal combustion engine (100) according to the claims 1, 4 and 6 comprising the consecutive steps of
- setting the first liquid fuel purge mode to purge the fuel supply system (110) with a high pressure inert gas,
- preferably setting the second liquid fuel purge mode to purge the fuel injection system (120) with a high pressure inert gas,
- setting the first gaseous fuel purge mode to purge the fuel injection system (120) with a low pressure inert gas,
- preferably setting the second gaseous fuel purge mode to purge the fuel supply system (110) with a low pressure inert gas.

19. The method, according to any one of the claims 15 to 18, for operating an internal combustion engine (100) according to any one of the claims 11 to 13, comprising steps of
- providing a cooling agent to the fuel supply system (110), preferably via a cooling inlet valve (306),
- guiding the cooling agent through the fuel injection system (120), in particular while the engine is in an idle mode.

20. The method according to claim 19 wherein the step of guiding the cooling agent through the fuel injection system (120) is carried out via the injection line (121), the injector (122), and at least one second purging line (142), wherein each second purging line (142) is fluidly connected with one injector (122).

21. The method according to any one of the claims 19 to 20 comprising the step of using the injector cooling system (300) for a pressure test, in particular after maintenance of the internal combustion engine (100).

22. The method according to any one of the claims 19 to 21 comprising the step of injecting the cooling agent through the injector (122) into the cylinder (101) in particular when the internal combustion engine (100) is in an idle mode or when the internal combustion engine (100) works on a backup fuel.

## Patentansprüche

1. Brennkraftmaschine (100), die mindestens einen Zylinder (101) mit einem Innendurchmesser von mindestens 200 mm aufweist, umfassend
- ein Kraftstoffversorgungssystem (110) mit einem Hauptkraftstofftank (111) und einem Kraftstoffverteiler (112),
- ein Kraftstoffeinspritzsystem (120), das dem Kraftstoffverteiler (112) nachgeschaltet angeordnet ist und mindestens eine Einspritzleitung (121) und mindestens einen Injektor (122) für jeden Zylinder (101) umfasst,
- ein Trennventil (9), das fluidtechnisch zwischen dem Kraftstoffversorgungssystem (110) und dem Kraftstoffeinspritzsystem (120) angeordnet ist, und
- ein Kraftstoffspülsystem (125), umfassend
ein Flüssigkraftstoff-Spülsystem (130) mit
∘ einer Hochdruckquelle (131) für Inertgas, vorzugsweise mit einem Druck von mehr als 30 bar, die mit dem Kraftstoffversorgungssystem (110) stromaufwärts des Kraftstoffverteilers (112) fluidtechnisch verbunden oder verbindbar ist,
∘ einem Auffangbehälter (132) zum Aufnehmen und Speichern von flüssigem Kraftstoff, und
∘ einer ersten Spülleitung (133), die über ein Spülventil (134) mit dem Kraftstoffverteiler (112) fluidtechnisch verbunden oder verbindbar ist, um eine Fluidverbindung zwischen dem Kraftstoffversorgungssystem (110) und dem Auffangbehälter (132) herzustellen,
wobei das Kraftstoffspülsystem (125) eine Spülsteuereinheit (150) umfasst, die konfiguriert ist, um einen ersten Flüssigkraftstoff-Spülmodus zum Spülen des Kraftstoffversorgungssystems (110) einzustellen, so dass
∘ eine Fluidverbindung zwischen der Hochdruckquelle (131) für Inertgas und dem Kraftstoffverteiler (112) hergestellt wird,
∘ eine Fluidverbindung zwischen dem Kraftstoffverteiler (112) und dem Auffangbehälter (132) hergestellt wird, so dass Inertgas von der Hochdruckquelle (131) für Inertgas durch den Kraftstoffverteiler (112) und in den Auffangbehälter (132) geleitet wird, und
∘ so dass
∘ vorzugsweise das Trennventil (9) so eingestellt wird, dass es die Verbindung zwischen dem Kraftstoffversorgungssystem (110) und dem Kraftstoffeinspritzsystem (120) schliesst, bevor eine Fluidverbindung zwischen der Hochdruckquelle (131) für Inertgas und dem Kraftstoffverteiler (112) hergestellt wird,
und wobei
das Kraftstoffspülsystem (125) ein Gaskraftstoff-Spülsystem (140) umfasst mit
∘ einer Niederdruckquelle (141) für Inertgas, vorzugsweise mit einem Druck von 3-7 bar, die mit dem Kraftstoffeinspritzsystem (120) fluidtechnisch verbunden oder verbindbar ist,
∘ mindestens einer zweiten Spülleitung (142), wobei jede zweite Spülleitung (142) mit einem Injektor (122) fluidtechnisch verbunden ist, und
∘ einem Spülbehälter (143) zum Aufnehmen und Speichern von gasförmigem Kraftstoff,
wobei die Spülsteuereinheit (150) konfiguriert ist, um einen ersten Gaskraftstoff-Spülmodus zum Spülen des Kraftstoffeinspritzsystems (120) einzustellen, so dass
∘ ein Druck im Kraftstoffeinspritzsystem (120) so reduziert wird, dass Kraftstoff im Kraftstoffeinspritzsystem (120) verdampft,
∘ eine Fluidverbindung zwischen der Niederdruckquelle (141) für Inertgas und dem Kraftstoffeinspritzsystem (120) hergestellt wird, und
∘ eine Fluidverbindung zwischen dem Kraftstoffeinspritzsystem (120) und dem Spülbehälter (143) hergestellt wird, so dass Inertgas von der Niederdruckquelle (141) für Inertgas durch das Kraftstoffeinspritzsystem (120) und in den Spülbehälter (143) geleitet wird.

2. Brennkraftmaschine (100) nach Anspruch 1, wobei ein Druckentlastungsventil (12, 145) des Gaskraftstoff-Spülsystems (140) mit dem Spülbehälter (143) und/oder einem separaten Niederdruckspeicher für Inertgas (144) verbindbar ist, und wobei im ersten Gaskraftstoff-Spülmodus die Spülsteuereinheit (150) konfiguriert ist, um den Druck im Kraftstoffeinspritzsystem (120) zu reduzieren, indem das Druckentlastungsventil (145) so eingestellt wird, dass es zum Spülbehälter (143) und/oder zum separaten Niederdruckspeicher für Inertgas (144) geöffnet wird.

3. Brennkraftmaschine (100) nach einem der Ansprüche 1 bis 2, umfassend einen SCR-Katalysator (102) und ein SCR-Ventil (103), das fluidtechnisch zwischen der mindestens einen zweiten Spülleitung (142) und dem SCR-Katalysator (102) angeordnet ist,
wobei die Spülsteuereinheit (150) konfiguriert ist, um das SCR-Ventil (103) so einzustellen, dass es zum Druckabbau geöffnet wird und die Menge an gasförmigem Kraftstoff so einzustellen, dass sie das Kraftstoffeinspritzsystem (120) verlässt und in den SCR-Katalysator (102) eintritt, und insbesondere die Fluidverbindung zwischen der zweiten Spülleitung (142) und dem Spülbehälter (143) zu schliessen, so dass der gesamte gasförmige Kraftstoff in den SCR-Katalysator (102) geleitet wird.

4. Brennkraftmaschine (100) nach einem der vorhergehenden Ansprüche, wobei die Spülsteuereinheit (150) konfiguriert ist, um einen zweiten Flüssigkraftstoff-Spülmodus zum Spülen des Kraftstoffeinspritzsystems (120) einzustellen, insbesondere gleichzeitig mit oder nachfolgend zu dem ersten Flüssigkraftstoff-Spülmodus, so dass
∘ eine Fluidverbindung zwischen der Hochdruckquelle (131) für Inertgas und dem Kraftstoffeinspritzsystem (120) hergestellt wird, und
∘ eine Fluidverbindung zwischen dem Kraftstoffeinspritzsystem (120) und dem Auffangbehälter (132) und/oder zwischen dem Kraftstoffeinspritzsystem (120) und dem Spülbehälter (143) hergestellt wird,
∘ so dass Inertgas von der Hochdruckquelle (131) für Inertgas durch das Kraftstoffeinspritzsystem (120) und in den Auffangbehälter (132) und/oder in den Spülbehälter (143) geleitet wird.

5. Brennkraftmaschine (100) nach Anspruch 4, wobei die Spülsteuereinheit (150) konfiguriert ist, um das Trennventil (9) so einzustellen, dass es die Verbindung zwischen dem Kraftstoffversorgungssystem (110) und dem Kraftstoffeinspritzsystem (120) öffnet und die Verbindung zwischen der Hochdruckquelle (131) für Inertgas und dem Kraftstoffeinspritzsystem (120) öffnet, so dass Inertgas von der Hochdruckquelle (131) über das Kraftstoffversorgungssystem (110) und das Trennventil (9) in das Kraftstoffeinspritzsystem (120) eintritt,
wobei vorzugsweise die Spülsteuereinheit (150) konfiguriert ist, um das Spülventil (134) einzustellen, um die Verbindung zwischen dem Kraftstoffverteiler (112) und der ersten Spülleitung (133) zu schliessen.

6. Brennkraftmaschine (100) nach einem der Ansprüche 1 bis 5, wobei die Spülsteuereinheit (150) konfiguriert ist, um einen zweiten Gaskraftstoff-Spülmodus zum Spülen des Kraftstoffversorgungssystems (110) nachfolgend zu dem ersten Flüssigkraftstoff-Spülmodus einzustellen, so dass
∘ eine Fluidverbindung zwischen der Niederdruckquelle (141) für Inertgas und dem Kraftstoffversorgungssystem (110) hergestellt wird, und
∘ eine Fluidverbindung zwischen dem Kraftstoffversorgungssystem (110) und dem Spülbehälter (143) hergestellt wird.

7. Brennkraftmaschine (100) nach einem der vorhergehenden Ansprüche, umfassend mindestens eines von
- einem ersten Sensor (123) zum Liefern von Daten, die eine Kraftstoffkonzentration im Kraftstoffeinspritzsystem (120) anzeigen, und
- einem zweiten Sensor zum Liefern von Daten, die eine Kraftstoffkonzentration im Kraftstoffversorgungssystem (110) anzeigen, und
wobei die Spülsteuereinheit (150) konfiguriert ist, um die von dem ersten und/oder dem zweiten Sensor bereitgestellten Daten zu empfangen, und konfiguriert ist, um in Abhängigkeit von den Daten zu entscheiden, ob ein jeweiliger Spülmodus aufrechterhalten oder wiederholt werden muss.

8. Brennkraftmaschine (100) nach einem der Ansprüche 1 bis 7, wobei die Brennkraftmaschine mehr als einen Zylinder (101) umfasst und
wobei im ersten Gaskraftstoff-Spülmodus die Spülsteuereinheit (150) konfiguriert ist, um nur einen Teil des Kraftstoffeinspritzsystems (120) zu spülen, der sich auf eine Teilmenge der Zylinder (101) bezieht, während der andere Zylinder oder die anderen Zylinder noch in Betrieb ist oder sind.

9. Brennkraftmaschine (100) nach einem der Ansprüche 1 bis 8, wobei der Spülbehälter (143) Wasser zur Absorption von Kraftstoff im Betrieb enthält oder mit einer Absorptionsstufe, die Wasser enthält, verbunden oder verbindbar ist.

10. Brennkraftmaschine (100) nach einem der Ansprüche 1 bis 9, wobei
- der Spülbehälter (143) und/oder der Auffangbehälter (132) ein Kraftstoffeinfangsystem, insbesondere eine Säurewäschervorrichtung oder eine Luftverdünnungsvorrichtung, umfasst, damit verbunden ist oder damit verbindbar ist
- und/oder
- der Spülbehälter (143) und/oder der Auffangbehälter (132) mit dem Zylinder (101) und/oder mit dem SCR-Katalysator (102) verbunden oder verbindbar ist
- und/oder
- wobei die Brennkraftmaschine (100) ein direktes Verbindungsrohr (2) zum direkten Verbinden des Auffangbehälters (132) und des Kraftstoffverteilers (112) umfasst, so dass gesammelter Kraftstoff aus dem Auffangbehälter dem Kraftstoffverteiler (112) zuführbar ist.

11. Brennkraftmaschine (100) nach einem der vorhergehenden Ansprüche, ferner umfassend
- ein Injektorkühlsystem (300), umfassend
∘ eine Quelle (303) eines Kühlmittels,
∘ ein Kühleinlassventil (306), das fluidtechnisch zwischen der Quelle eines Kühlmittels (303) und dem Kraftstoffeinspritzsystem (120) angeordnet ist,
∘ eine Kühlsteuereinheit (304), die konfiguriert ist, um das Kühleinlassventil (301) so einzustellen, dass das Kühlmittel in das Kraftstoffeinspritzsystem (120) eintreten kann, um für das Leiten des Kühlmittels durch das Kraftstoffeinspritzsystem (120) zu sorgen.

12. Brennkraftmaschine (100) nach Anspruch 11, die so konfiguriert ist, dass, wenn kein Kraftstoffspülmodus aktiv ist, das Kühlmittel durch die mindestens eine Einspritzleitung (121), den mindestens einen Injektor (122) und die zweite Spülleitung (142) geleitet werden kann,
insbesondere wenn sich die Brennkraftmaschine (100) in einem Leerlaufmodus befindet oder wenn die Brennkraftmaschine (100) mit einem Reservekraftstoff arbeitet.

13. Brennkraftmaschine (100) nach einem der Ansprüche 11 oder 12, wobei das Injektorkühlsystem (300) eine Kühlauslassleitung (305) umfasst, die fluidtechnisch zwischen der zweiten Spülleitung (142) und der Quelle (303) des Kühlmittels angeordnet ist, um einen Kühlmittelkreislauf herzustellen.

14. Brennkraftmaschine (100) nach einem der vorhergehenden Ansprüche, die konfiguriert ist, um Ammoniak als Kraftstoff zu verwenden.

15. Verfahren zum Betreiben einer Brennkraftmaschine (100), vorzugsweise einer Brennkraftmaschine (100) nach einem der Ansprüche 1 bis 14, die mindestens einen Zylinder (101) mit einem Innendurchmesser von mindestens 200 mm aufweist, umfassend
- ein Kraftstoffversorgungssystem (110) mit einem Hauptkraftstofftank (111) und einem Kraftstoffverteiler (112),
- ein Kraftstoffeinspritzsystem (120), das dem Kraftstoffverteiler (112) nachgeschaltet angeordnet ist und mindestens eine Einspritzleitung (121) und mindestens einen Injektor (122) für jeden Zylinder (101) umfasst,
wobei das Verfahren die Schritte umfasst:
- vorzugsweise Schliessen der Fluidverbindung zwischen dem Kraftstoffversorgungssystem (110) und dem Kraftstoffeinspritzsystem (120),
- Bereitstellen von Hochdruck-Inertgas, vorzugsweise mit einem Druck von mehr als 30 bar,
- Leiten des Hochdruck-Inertgases durch den Kraftstoffverteiler (112) in einen Auffangbehälter (132) und dadurch Transportieren von flüssigem Kraftstoff aus dem Kraftstoffversorgungssystem (110) in den Auffangbehälter (132),
- Reduzieren des Drucks im Kraftstoffeinspritzsystem (120), so dass Kraftstoff im Kraftstoffeinspritzsystem (120) verdampft,
- Bereitstellen von Niederdruck-Inertgas, vorzugsweise mit einem Druck von 3-7 bar, für das Kraftstoffeinspritzsystem (120),
- Leiten des Niederdruck-Inertgases durch das Kraftstoffeinspritzsystem (120) in einen Spülbehälter (143) über mindestens eine zweite Spülleitung (142), wobei jede zweite Spülleitung (142) mit einem Injektor (122) fluidtechnisch verbunden ist, und dadurch Transportieren von im Kraftstoffeinspritzsystem (120) verdampftem gasförmigem Kraftstoff in den Spülbehälter (143).

16. Verfahren nach Anspruch 15, umfassend die Schritte:
- vorzugsweise Öffnen der Fluidverbindung zwischen dem Kraftstoffversorgungssystem (110) und dem Kraftstoffeinspritzsystem (120),
- Leiten des Hochdruck-Inertgases durch das Kraftstoffeinspritzsystem (120) in den Auffangbehälter (132) und/oder den Spülbehälter (143) und dadurch Transportieren von flüssigem Kraftstoff aus dem Kraftstoffeinspritzsystem (120) in den Auffangbehälter (132) und/oder den Spülbehälter (143).

17. Verfahren nach einem der Ansprüche 15 bis 16, umfassend die Schritte:
- Reduzieren des Drucks im Kraftstoffversorgungssystem (110), so dass Kraftstoff im Kraftstoffversorgungssystem (110) verdampft,
- Bereitstellen von Niederdruck-Inertgas, vorzugsweise mit einem Druck von 3-7 bar,
- Leiten des Niederdruck-Inertgases durch den Kraftstoffverteiler (112) in einen Spülbehälter (143), wodurch im Kraftstoffversorgungssystem (110) verdampfter gasförmiger Kraftstoff in den Spülbehälter (143) transportiert wird.

18. Verfahren nach einem der Ansprüche 15 bis 17 zum Betreiben einer Brennkraftmaschine (100) nach den Ansprüchen 1, 4 und 6, umfassend die aufeinanderfolgenden Schritte:
- Einstellen des ersten Flüssigkraftstoff-Spülmodus zum Spülen des Kraftstoffversorgungssystems (110) mit einem Hochdruck-Inertgas,
- vorzugsweise Einstellen des zweiten Flüssigkraftstoff-Spülmodus zum Spülen des Kraftstoffeinspritzsystems (120) mit einem Hochdruck-Inertgas,
- Einstellen des ersten Gaskraftstoff-Spülmodus zum Spülen des Kraftstoffeinspritzsystems (120) mit einem Niederdruck-Inertgas,
- vorzugsweise Einstellen des zweiten Gaskraftstoff-Spülmodus zum Spülen des Kraftstoffversorgungssystems (110) mit einem Niederdruck-Inertgas.

19. Verfahren nach einem der Ansprüche 15 bis 18 zum Betreiben einer Brennkraftmaschine (100) nach einem der Ansprüche 11 bis 13, umfassend die Schritte:
- Zuführen eines Kühlmittels zum Kraftstoffversorgungssystem (110), vorzugsweise über ein Kühleinlassventil (306),
- Leiten des Kühlmittels durch das Kraftstoffeinspritzsystem (120), insbesondere während sich der Motor in einem Leerlaufmodus befindet.

20. Verfahren nach Anspruch 19, wobei der Schritt des Leitens des Kühlmittels durch das Kraftstoffeinspritzsystem (120) über die Einspritzleitung (121), den Injektor (122) und mindestens eine zweite Spülleitung (142) ausgeführt wird, wobei jede zweite Spülleitung (142) mit einem Injektor (122) fluidtechnisch verbunden ist.

21. Verfahren nach einem der Ansprüche 19 bis 20, umfassend den Schritt der Verwendung des Injektorkühlsystems (300) für eine Druckprüfung, insbesondere nach einer Wartung der Brennkraftmaschine (100).

22. Verfahren nach einem der Ansprüche 19 bis 21, umfassend den Schritt des Einspritzens des Kühlmittels durch den Injektor (122) in den Zylinder (101), insbesondere wenn sich die Brennkraftmaschine (100) in einem Leerlaufmodus befindet oder wenn die Brennkraftmaschine (100) mit einem Reservekraftstoff arbeitet.

## Revendications

1. Moteur à combustion interne (100), ayant au moins un cylindre (101) avec un diamètre intérieur d'au moins 200 mm, comprenant
- un système d'alimentation en carburant (110) avec un réservoir de carburant principal (111) et un distributeur de carburant (112),
- un système d'injection de carburant (120) agencé en aval du distributeur de carburant (112) comprenant au moins une conduite d'injection (121) et au moins un injecteur (122) pour chaque cylindre (101),
- une vanne de séparation (9) agencée de manière fluidique entre le système d'alimentation en carburant (110) et le système d'injection de carburant (120), et
- un système de purge de carburant (125) comprenant un système de purge de carburant liquide (130) avec
∘ une source de gaz inerte à haute pression (131), de préférence avec une pression de plus de 30 bar, reliée ou apte à être reliée de manière fluidique au système d'alimentation en carburant (110) en amont du distributeur de carburant (112),
∘ un réservoir de récupération (132) pour recevoir et stocker du carburant liquide, et
∘ une première conduite de purge (133) reliée ou apte à être reliée de manière fluidique via une vanne de purge (134) au distributeur de carburant (112) pour établir une liaison fluidique entre le système d'alimentation en carburant (110) et le réservoir de récupération (132),
dans lequel le système de purge de carburant (125) comprend une unité de commande de purge (150) configurée pour régler un premier mode de purge de carburant liquide pour purger le système d'alimentation en carburant (110), de sorte que
∘ une liaison fluidique est établie entre la source de gaz inerte à haute pression (131) et le distributeur de carburant (112),
∘ une liaison fluidique est établie entre le distributeur de carburant (112) et le réservoir de récupération (132) de sorte que le gaz inerte provenant de la source de gaz inerte à haute pression (131) est guidé à travers le distributeur de carburant (112) et dans le réservoir de récupération (132), et
∘ de sorte que
∘ de préférence, la vanne de séparation (9) est réglée pour fermer la liaison entre le système d'alimentation en carburant (110) et le système d'injection de carburant (120) avant qu'une liaison fluidique entre la source de gaz inerte à haute pression (131) et le distributeur de carburant (112) ne soit établie,
et dans lequel
le système de purge de carburant (125) comprend un système de purge de carburant gazeux (140) avec
∘ une source de gaz inerte à basse pression (141), de préférence avec une pression de 3-7 bar, reliée ou apte à être reliée de manière fluidique au système d'injection de carburant (120),
∘ au moins une seconde conduite de purge (142), chaque seconde conduite de purge (142) étant reliée de manière fluidique à un injecteur (122), et
∘ un réservoir de purge (143) pour recevoir et stocker du carburant gazeux,
dans lequel l'unité de commande de purge (150) est configurée pour régler un premier mode de purge de carburant gazeux pour purger le système d'injection de carburant (120), de sorte que
∘ une pression dans le système d'injection de carburant (120) est réduite de sorte que le carburant dans le système d'injection de carburant (120) s'évapore,
∘ une liaison fluidique est établie entre la source de gaz inerte à basse pression (141) et le système d'injection de carburant (120), et
∘ une liaison fluidique est établie entre le système d'injection de carburant (120) et le réservoir de purge (143) de sorte que le gaz inerte provenant de la source de gaz inerte à basse pression (141) est guidé à travers le système d'injection de carburant (120) et dans le réservoir de purge (143).

2. Moteur à combustion interne (100) selon la revendication 1, dans lequel une soupape de décharge de pression (12, 145) du système de purge de carburant gazeux (140) est apte à être reliée au réservoir de purge (143) et/ou à un réservoir de gaz inerte à basse pression séparé (144), et
dans lequel, dans le premier mode de purge de carburant gazeux, l'unité de commande de purge (150) est configurée pour réduire la pression dans le système d'injection de carburant (120) en réglant la soupape de décharge de pression (145) pour qu'elle soit ouverte vers le réservoir de purge (143) et/ou vers le réservoir de gaz inerte à basse pression séparé (144).

3. Moteur à combustion interne (100) selon l'une quelconque des revendications 1 à 2, comprenant un catalyseur SCR (102) et une vanne SCR (103) agencée de manière fluidique entre l'au moins une seconde conduite de purge (142) et le catalyseur SCR (102),
dans lequel l'unité de commande de purge (150) est configurée pour régler la vanne SCR (103) pour qu'elle soit ouverte afin de relâcher la pression et pour régler la quantité de carburant gazeux devant quitter le système d'injection de carburant (120) et entrer dans le catalyseur SCR (102), et en particulier pour fermer la liaison fluidique entre la seconde conduite de purge (142) et le réservoir de purge (143) de sorte que tout le carburant gazeux est guidé dans le catalyseur SCR (102).

4. Moteur à combustion interne (100) selon l'une quelconque des revendications précédentes, dans lequel l'unité de commande de purge (150) est configurée pour régler un second mode de purge de carburant liquide pour purger le système d'injection de carburant (120), en particulier en même temps que ou à la suite du premier mode de purge de carburant liquide, de sorte que
∘ une liaison fluidique est établie entre la source de gaz inerte à haute pression (131) et le système d'injection de carburant (120), et
∘ une liaison fluidique est établie entre le système d'injection de carburant (120) et le réservoir de récupération (132) et/ou entre le système d'injection de carburant (120) et le réservoir de purge (143),
de sorte que le gaz inerte provenant de la source de gaz inerte à haute pression (131) est guidé à travers le système d'injection de carburant (120) et dans le réservoir de récupération (132) et/ou dans le réservoir de purge (143).

5. Moteur à combustion interne (100) selon la revendication 4, dans lequel l'unité de commande de purge (150) est configurée pour régler la vanne de séparation (9) pour ouvrir la liaison entre le système d'alimentation en carburant (110) et le système d'injection de carburant (120) et pour ouvrir la liaison entre la source de gaz inerte à haute pression (131) et le système d'injection de carburant (120), de sorte que le gaz inerte provenant de la source de gaz inerte à haute pression (131) entre dans le système d'injection de carburant (120) via le système d'alimentation en carburant (110) et la vanne de séparation (9), dans lequel, de préférence, l'unité de commande de purge (150) est configurée pour régler la vanne de purge (134) afin de fermer la liaison entre le distributeur de carburant (112) et la première conduite de purge (133).

6. Moteur à combustion interne (100) selon l'une quelconque des revendications 1 à 5, dans lequel l'unité de commande de purge (150) est configurée pour régler un second mode de purge de carburant gazeux pour purger le système d'alimentation en carburant (110) à la suite du premier mode de purge de carburant liquide, de sorte que
∘ une liaison fluidique est établie entre la source de gaz inerte à basse pression (141) et le système d'alimentation en carburant (110), et
∘ une liaison fluidique est établie entre le système d'alimentation en carburant (110) et le réservoir de purge (143).

7. Moteur à combustion interne (100) selon l'une quelconque des revendications précédentes, comprenant au moins l'un parmi
- un premier capteur (123) pour fournir des données indicatives d'une concentration en carburant dans le système d'injection de carburant (120), et
- un second capteur pour fournir des données indicatives d'une concentration en carburant dans le système d'alimentation en carburant (110), et
dans lequel l'unité de commande de purge (150) est configurée pour recevoir les données fournies par le premier et/ou le second capteur et configurée pour décider si un mode de purge respectif doit être maintenu ou répété en fonction des données.

8. Moteur à combustion interne (100) selon l'une quelconque des revendications 1 à 7, dans lequel le moteur à combustion interne comprend plus d'un cylindre (101) et
dans lequel, dans le premier mode de purge de carburant gazeux, l'unité de commande de purge (150) est configurée pour purger uniquement une partie du système d'injection de carburant (120) se rapportant à un sous-ensemble des cylindres (101) tandis que l'autre cylindre ou les autres cylindres est ou sont toujours en fonctionnement.

9. Moteur à combustion interne (100) selon l'une quelconque des revendications 1 à 8, dans lequel le réservoir de purge (143) contient de l'eau pour l'absorption de carburant, en utilisation, ou est relié ou apte à être relié à un étage d'absorption contenant de l'eau.

10. Moteur à combustion interne (100) selon l'une quelconque des revendications 1 à 9, dans lequel
- le réservoir de purge (143) et/ou le réservoir de récupération (132) comprend, est relié à, ou est apte à être relié à un système de capture de carburant, en particulier un dispositif de lavage acide ou un dispositif de dilution par air
et/ou
- le réservoir de purge (143) et/ou le réservoir de récupération (132) est relié ou apte à être relié au cylindre (101) et/ou au catalyseur SCR (102) et/ou
- dans lequel le moteur à combustion interne (100) comprend un tuyau de raccordement direct (2) pour relier directement le réservoir de récupération (132) et le distributeur de carburant (112), de sorte que le carburant collecté du réservoir de récupération peut être fourni au distributeur de carburant (112).

11. Moteur à combustion interne (100) selon l'une quelconque des revendications précédentes, comprenant en outre
- un système de refroidissement d'injecteur (300) comprenant
∘ une source (303) d'un agent de refroidissement,
∘ une vanne d'entrée de refroidissement (306) agencée de manière fluidique entre la source d'un agent de refroidissement (303) et le système d'injection de carburant (120),
∘ une unité de commande de refroidissement (304) configurée pour régler la vanne d'entrée de refroidissement (301) de manière à permettre à l'agent de refroidissement d'entrer dans le système d'injection de carburant (120) pour assurer le guidage de l'agent de refroidissement à travers le système d'injection de carburant (120).

12. Moteur à combustion interne (100) selon la revendication 11, configuré de sorte que, lorsqu'aucun mode de purge de carburant n'est actif, l'agent de refroidissement peut être guidé à travers l'au moins une conduite d'injection (121),
l'au moins un injecteur (122), et la seconde conduite de purge (142),
en particulier lorsque le moteur à combustion interne (100) est en mode ralenti ou lorsque le moteur à combustion interne (100) fonctionne avec un carburant de secours.

13. Moteur à combustion interne (100) selon l'une quelconque des revendications 11 ou 12, dans lequel le système de refroidissement d'injecteur (300) comprend une conduite de sortie de refroidissement (305) agencée de manière fluidique entre la seconde conduite de purge (142) et la source (303) de l'agent de refroidissement pour établir un circuit d'agent de refroidissement.

14. Moteur à combustion interne (100) selon l'une quelconque des revendications précédentes, configuré pour utiliser de l'ammoniac comme carburant.

15. Procédé de fonctionnement d'un moteur à combustion interne (100), de préférence un moteur à combustion interne (100) selon l'une quelconque des revendications 1 à 14, ayant au moins un cylindre (101) avec un diamètre intérieur d'au moins 200 mm, comprenant
- un système d'alimentation en carburant (110) avec un réservoir de carburant principal (111) et un distributeur de carburant (112),
- un système d'injection de carburant (120) agencé en aval du distributeur de carburant (112) comprenant au moins une conduite d'injection (121) et au moins un injecteur (122) pour chaque cylindre (101),
le procédé comprenant les étapes consistant à
- fermer de préférence la liaison fluidique entre le système d'alimentation en carburant (110) et le système d'injection de carburant (120),
- fournir du gaz inerte à haute pression, de préférence avec une pression de plus de 30 bar,
- guider le gaz inerte à haute pression à travers le distributeur de carburant (112) dans un réservoir de récupération (132) et transporter ainsi du carburant liquide du système d'alimentation en carburant (110) dans le réservoir de récupération (132),
- réduire la pression dans le système d'injection de carburant (120) de sorte que le carburant dans le système d'injection de carburant (120) s'évapore,
- fournir du gaz inerte à basse pression, de préférence avec une pression de 3-7 bar, au système d'injection de carburant (120),
- guider le gaz inerte à basse pression à travers le système d'injection de carburant (120) dans un réservoir de purge (143) via au moins une seconde conduite de purge (142), chaque seconde conduite de purge (142) étant reliée de manière fluidique à un injecteur (122), et transporter ainsi le carburant gazeux évaporé dans le système d'injection de carburant (120) dans le réservoir de purge (143).

16. Procédé selon la revendication 15, comprenant les étapes consistant à
- ouvrir de préférence la liaison fluidique entre le système d'alimentation en carburant (110) et le système d'injection de carburant (120),
- guider le gaz inerte à haute pression à travers le système d'injection de carburant (120) dans le réservoir de récupération (132) et/ou le réservoir de purge (143) et transporter ainsi du carburant liquide du système d'injection de carburant (120) dans le réservoir de récupération (132) et/ou le réservoir de purge (143).

17. Procédé selon l'une quelconque des revendications 15 à 16, comprenant les étapes consistant à
- réduire la pression dans le système d'alimentation en carburant (110) de sorte que le carburant s'évapore dans le système d'alimentation en carburant (110),
- fournir du gaz inerte à basse pression, de préférence avec une pression de 3-7 bar,
- guider le gaz inerte à basse pression à travers le distributeur de carburant (112) dans un réservoir de purge (143), transportant ainsi le carburant gazeux évaporé dans le système d'alimentation en carburant (110) dans le réservoir de purge (143).

18. Procédé selon l'une quelconque des revendications 15 à 17 pour le fonctionnement d'un moteur à combustion interne (100) selon les revendications 1, 4 et 6, comprenant les étapes consécutives consistant à
- régler le premier mode de purge de carburant liquide pour purger le système d'alimentation en carburant (110) avec un gaz inerte à haute pression,
- régler de préférence le second mode de purge de carburant liquide pour purger le système d'injection de carburant (120) avec un gaz inerte à haute pression,
- régler le premier mode de purge de carburant gazeux pour purger le système d'injection de carburant (120) avec un gaz inerte à basse pression,
- régler de préférence le second mode de purge de carburant gazeux pour purger le système d'alimentation en carburant (110) avec un gaz inerte à basse pression.

19. Procédé, selon l'une quelconque des revendications 15 à 18, pour le fonctionnement d'un moteur à combustion interne (100) selon l'une quelconque des revendications 11 à 13, comprenant les étapes consistant à
- fournir un agent de refroidissement au système d'alimentation en carburant (110), de préférence via une vanne d'entrée de refroidissement (306),
- guider l'agent de refroidissement à travers le système d'injection de carburant (120), en particulier pendant que le moteur est en mode ralenti.

20. Procédé selon la revendication 19, dans lequel l'étape de guidage de l'agent de refroidissement à travers le système d'injection de carburant (120) est effectuée via la conduite d'injection (121), l'injecteur (122), et au moins une seconde conduite de purge (142), dans lequel chaque seconde conduite de purge (142) est reliée de manière fluidique à un injecteur (122).

21. Procédé selon l'une quelconque des revendications 19 à 20, comprenant l'étape d'utilisation du système de refroidissement d'injecteur (300) pour un essai de pression, en particulier après une maintenance du moteur à combustion interne (100).

22. Procédé selon l'une quelconque des revendications 19 à 21, comprenant l'étape d'injection de l'agent de refroidissement à travers l'injecteur (122) dans le cylindre (101), en particulier lorsque le moteur à combustion interne (100) est en mode ralenti ou lorsque le moteur à combustion interne (100) fonctionne avec un carburant de secours.
